(19) Europäisches Patentamt
European Patent Office
Office européen des brevets

(11) Numéro de publication : **0 053 079**
**B1**

(12) # FASCICULE DE BREVET EUROPÉEN

(45) Date de publication du fascicule du brevet : **07.08.85**

(51) Int. Cl.⁴ : **A 63 F 1/06**, G 09 B 19/22

(21) Numéro de dépôt : **81401851.1**

(22) Date de dépôt : **23.11.81**

(54) **Dispositif de faible encombrement pour simuler une donne de bridge.**

(30) Priorité : **24.11.80 FR 8024898**

(43) Date de publication de la demande : **02.06.82 Bulletin 82/22**

(45) Mention de la délivrance du brevet : **07.08.85 Bulletin 85/32**

(84) Etats contractants désignés : **DE GB IT**

(56) Documents cités :
**BE-A- 396 705**
**US-A- 2 038 734**

(73) Titulaire : **Gedon, Catherine, épouse Montaut**
**17, rue de Sèvres**
**F-92100 Boulogne Billancourt (FR)**

(72) Inventeur : **Gedon, Catherine, épouse Montaut**
**17, rue de Sèvres**
**F-92100 Boulogne Billancourt (FR)**

(74) Mandataire : **Hud, Robert**
**Cabinet COLLIGNON 6, rue de Madrid**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

EP 0 053 079 B1

**Description**

L'invention a pour objet un dispositif de faible encombrement pour simuler une donne de bridge et représenter à la fois simultanément les jeux des quatre joueurs ainsi que les levées effectuées dans l'ordre de leur accomplissement en permettant leur annulation dans l'ordre inverse pour un retour à une situation antérieure en vue par exemple de l'essai d'autres levées.

Le brevet belge N° 396 705 concerne un dispositif établi sous forme de tableau, permettant l'étude du jeu de bridge et la résolution des problèmes de bridge.

Ce dispositif utilise, pour simuler les cartes à jouer, des plots incrustables dans des cavités présentées par une tablette rigide. De plus les cavités en question sont disposées pour figurer d'une part les quatre jeux d'une donne et d'autre part la succession des levées effectuées, et aussi pour assurer le rangement des plots par couleurs. Cependant, selon ce brevet belge, chaque plot utilisé ne comporte que l'indication de la valeur d'une carte ou l'indication d'une couleur, ce qui oblige, pour la figuration de chaque main, à utiliser quatre paires de rangées de treize cavités, chaque paire de rangées comprenant une rangée destinée à recevoir des plots indiquant une couleur et une rangée destinée à indiquer les valeurs des cartes. De façon analogue la figuration de chaque levée effectuée nécessite un tableau de seize cavités comprenant quatre lignes et quatre colonnes. On voit ainsi que le dispositif du brevet belge cité entraîne un encombrement important, cet encombrement constituant un inconvénient pour le transport de ce genre de dispositif et son utilisation en voyage, occasion d'utilisation pourtant particulièrement favorable puisque le joueur dispose alors généralement de temps libre.

On remarquera aussi que le dispositif de ce brevet belge n'assure la visualisation que de l'enchère finale et non pas le déroulement complet des enchères.

Le brevet américain N° 2 038 734 concerne un dispositif pour l'étude et la pratique du bridge, utilisant un tableau dans lequel sont ménagées un certain nombre de fentes destinées à recevoir des cartes à joueur. Ce dispositif comporte d'une part quatre fentes réparties sur la périphérie d'une aire centrale carrée pour représenter les quatre jeux d'une donne et d'autre part, à l'intérieur de cette aire centrale, quatre fentes parallèles, correspondant chacune à un joueur et permettant de visualiser les levées en colonnes au fur et à mesure de leur déroulement.

Il est à remarquer que l'utilisation de cartes à jouer (et non pas de plots) entraîne un encombrement assez important en raison du format habituel des cartes à jouer. Pour réduire cet encombrement, on prévoit de superposer les cartes en ne laissant visible pour chacune d'entre elles que l'indication figurant sur l'un de ses bords, ce qui ne facilite pas la lecture. De plus, compte tenu de la structure symétrique des cartes à jouer, il n'est pas possible de faire apparaître simplement et de façon visible la carte gagnante de chaque levée.

L'invention a donc pour objet de réunir de façon particulièrement lisible, sur une surface aussi réduite que possible permettant un transport et une utilisation aisés dans des circonstances diverses, par exemple en voyage, un maximum d'informations relatives au déroulement d'une partie de bridge.

Le dispositif pour simuler une donne de bridge et les levées à effectuer selon l'invention est composé d'une planchette (21) comportant des cavités dans lesquelles sont destinés à s'encastrer partiellement des plots (23) de forme prismatique comportant une indication de valeur, une première série (29, 30, 31, 32) de cavités étant réparties sur la périphérie d'une aire centrale pratiquement carrée de façon à représenter les quatre jeux d'une donne quelconque, une seconde série de cavités recevant les plots pour représenter les treize levées au fur et à mesure de leur accomplissement et une troisième série (24, 25, 26, 27) de cavités recevant les cinquante deux plots classés en position de rangement, caractérisé en ce que chaque plot (23) comporte l'indication d'une valeur et d'une couleur symbolisant une carte à jouer, la première série de cavités comprenant, associée à chaque côté de l'aire centrale, une rangée unique de cavités (29, 30, 31, 32), pour recevoir côte à côte treize plots figurant les treize cartes d'une main, et la seconde série de cavités étant disposée à l'intérieur de l'aire centrale et comprenant treize lignes de quatre cavités, chacune de ces lignes étant destinée à accueillir les quatre plots correspondant à une levée, la présentation des plots permettant, pour chaque ligne représentant une levée, de distinguer rapidement la carte gagnante en inversant l'orientation du plot correspondant par rapport aux trois autres plots de cette ligne et en ce que la planchette (21) présente un emplacement (39) destiné à l'inscription du déroulement complet des enchères de chaque tour.

Pour bien faire comprendre l'invention, on en décrira ci-après un exemple préféré d'exécution en référence au dessin annexé qui est une vue de face de la planchette portant les plots dans une situation qui apparaît après six levées à la suite d'une donne que la planchette permettrait de reconstituer dans son état initial.

Bien que l'invention ne soit pas limitée à un choix particulier de dimensions, on peut indiquer, à titre d'exemple, que la planchette 21 peut présenter une face plane 22 dont les dimensions horizontales sont de 29,7 cm × 21 cm et dans laquelle sont ménagés des évidements d'une profondeur de 1 cm pour recevoir des plots 23 d'une hauteur double qui y seront donc encastrés sur la moitié de leur hauteur. Cette planchette peut être par exemple en bois ou en matière plastique mais elle peut aussi comprendre une armature métallique, notamment dans le cas de fixation magnétique. Les plots simulant les 52 cartes sont avantageusement des prismes droits à base rectangulaire portant chacun, sur leur base supérieure formant façade, une figurine représentant l'une des 52 cartes, par exemple d'une dimension de 15 × 10 mm.

Les plots simulant les cartes peuvent occuper soit une position de rangement par couleurs, soit une position de donne par répartition entre les quatre mains, soit une position de levée. Pour les positions de rangement, la planchette représentée comprend dans sa partie haute quatre rainures successives 24-25-26-27 d'une profondeur de 1 cm, d'une longueur de 13 cm et d'une largeur de 15 mm pour recevoir chacune côte à côte 13 plots de l'une des quatre couleurs (pique, cœur, carreau, trèfle). La planchette peut porter en regard de ces quatre rainures une étiquette 28 indiquant « Rangement par couleur ». Dans chacune des quatre rainures, on pourra ranger tous les plots d'une couleur dans leur ordre habituel (par exemple as, roi, dame, valet, 10, 9, etc...). Ces quatre rainures constituent la première série d'évidements comprenant les évidements de rangement et on a indiqué en trait interrompu les séparations entre les plots successifs à ranger dans chaque rainure.

La deuxième série d'évidements comprend quatre rainures analogues 29-30-31-32 constituant les évidements des mains qui peuvent être signalés respectivement par les étiquettes 33-34-35-36 portant respectivement les indications « Main d'Ouest », « Main de Nord », « Main d'Est » et « Main de Sud ». Ces quatre rainures forment les côtés d'un encadrement approximativement carré dont l'intérieur présente les évidements des levées comme on l'expliquera ci-après. Les rainures 29 à 32 ont une longueur de 14,5 cm, dépassant la longueur des rainures 24 à 27 de 15 mm pour recevoir, en plus des 13 plots correspondant à la main d'un joueur, trois plots de largeur moitié indiqués en 37 qui ont chacun un rôle de séparateur entre deux couleurs successives. Les séparateurs 37 sont destinés à rester en positions fixes au cours de la succession des levées en facilitant ainsi la reconstitution partielle ou totale de la donne initiale pour un retour vers le début du jeu par annulation des dernières levées.

La troisième série d'évidements comprend des évidements individuels ou alvéoles 38 répartis sur quatre colonnes en 13 rangées de 4 alvéoles numérotées de 1 à 13 pour recevoir les plots simulant les cartes des 13 levées successives, chaque plot étant placé dans la colonne (O, N, E ou S) correspondant à la main (d'Ouest, de Nord, d'Est ou du Sud) d'où provient la carte correspondante. Pour la bonne répartition des alvéoles, les sept premières levées peuvent se succéder sur la moitié de gauche du tableau des levées comme représenté, tandis que les six autres se succèdent sur la partie de droite. Dans l'exemple représenté au dessin, on a supposé que les six premières levées ont été faites de sorte que les rangées de levées numérotées de 1 à 6 sont garnies de plots correspondant aux cartes de ces levées, tandis que les alvéoles des sept autres rangées sont vides.

On a indiqué en 39 un tableau sur lequel on peut inscrire les annonces d'enchères et en 40 un tableau du résultat.

On remarquera que la forme rectangulaire des alvéoles et plots permet d'encastrer les plots dans leurs logements suivant deux positions symétriques et qu'il est ainsi possible, dans les rangées des levées, de signaler la carte gagnante par son insertion à l'envers dans l'alvéole correspondant, comme on l'a représenté sur la levée 1 par la position inversée du roi de trèfle, le dessin représentant la situation après la sixième levée d'une donne qu'on peut reconstituer en ramenant les plots des levées dans les rainures 29 à 32. Pour bien faire comprendre cette possibilité, on a indiqué au dessin dans chaque emplacement vide de ces rainures, en $l_1$, $l_2$, $l_3$, $l_4$, $l_5$ ou $l_6$, celle des six levées comprenant la carte manquante qui correspond à l'emplacement vide, de sorte que le plot correspondant se trouve dans la rangée de la levée ainsi indiquée et dans la colonne correspondant à la main considérée. Ainsi, par exemple, la case vide $l_1$ de la rainure 29 (main d'Ouest) contenait initialement le plot encastré dans l'alvéole appartenant à la rangée 1 et à la colonne 0, c'est-à-dire dans l'exemple représenté au 4 de trèfle.

On voit donc que non seulement le dispositif de l'invention permet de représenter le déroulement d'un jeu faisant suite à une donne quelconque mais encore qu'il est facile de revenir en arrière en annulant les dernières levées et en replaçant les plots correspondants dans les rainures des mains 29 à 32.

La planchette peut être facilement transportée en laissant les plots dans une situation quelconque car il suffit d'associer à cette planchette un couvercle pouvant se fixer par tous moyens appropriés, notamment par une sangle extérieure, de telle façon que la face interne de ce couvercle s'applique sur les façades des plots en retenant ceux-ci dans les cavités où ils ont été encastrés.

On comprendra que l'exemple d'exécution décrit ci-dessus en référence au dessin annexé n'a aucun caractère limitatif. Au dessin, on a indiqué en j deux alvéoles supplémentaires pouvant recevoir deux plots de joker portant en façade l'indication J.J. Dans l'exemple représenté au dessin, on a placé ces deux plots aux emplacements du valet des rangées 24 et 25 pour montrer la position d'un plot dans les rainures 24 à 27.

**Revendications**

1. Dispositif pour simuler une donne de bridge et les levées à effectuer, composé d'une planchette (21) comportant des cavités dans lesquelles sont destinés à s'encastrer partiellement des plots (23) de forme prismatique comportant une indication de valeur, une première série (29, 30, 31, 32) de cavités étant réparties sur la périphérie d'une aire centrale pratiquement carrée de façon à représenter les quatre jeux d'une donne quelconque, une seconde série de cavités recevant les plots pour représenter les treize levées au fur et à mesure de leur accomplissement et une troisième série (24, 25, 26, 27) de cavités recevant les cinquante-deux plots classés en position de rangement, caractérisé en ce que chaque plot (23) comporte à la fois une indication de valeur et une indication de couleur de manière à symboliser à lui seul une carte à jouer, en ce que la première série de cavités ne comprend, associée à chaque côté de l'aire centrale, qu'une rangée unique de cavités (29, 30, 31, 32), destinées à recevoir côte à côte treize plots figurant les treize cartes d'une main, et la seconde série de cavités est disposée à l'intérieur de l'aire centrale et ne comprend que treize lignes de quatre cavités réparties sur quatre colonnes affectées chacune à une main, chacune de ces lignes étant destinée à accueillir les quatre plots correspondant à une levée, en ce que la présentation des plots est asymétrique tandis que la forme des cavités est symétrique pour permettre, pour chaque ligne représentant une levée, de distinguer rapidement la carte gagnante en inversant l'orientation du plot correspondant par rapport aux trois autres plots de cette ligne et en ce que la planchette (21) présente un emplacement (39) destiné à l'inscription du déroulement complet des enchères de chaque tour.

2. Dispositif selon la revendication 1, caractérisé en ce que chacune des quatre rangées (29, 30, 31, 32) de cavités de la première série est constituée par une rainure qui reçoit, en plus des treize plots (23) figurant les treize cartes d'une main, trois plots séparateurs (27) destinés à être disposés entre les quatre couleurs.

## Claims

1. A device for simulating a bridge game and the tricks to be made, formed from a board (21) comprising cavities in which prismatic shaped pieces are intended to be fitted partially comprising a value indication, a first series (29, 30, 31, 32) of cavities being distributed about the periphery of a substantially square central area so as to represent the four hands of any deal, a second series of cavities receiving the pieces representing the thirteen tricks as they are taken and a third series (24, 25, 26, 27) of cavities receiving the 52 pieces sorted out into their storage positions, characterized in that each piece (23) comprises both a value indication and a suit indication so as to alone symbolize a card to be played, in that the first series of cavities comprises, associated with each side of the central area, only a single row of cavities (20, 30, 31, 32) intended to receive side by side 13 pieces representing the 13 cards in a hand and the second series of cavities is disposed in the central area and only comprises 13 lines of four cavities spaced appart in four columns each assigned to a hand, each of these lines being intended to receive the four pieces corresponding to a trick, in that the presentation of the pieces is assymmetric whereas the form of the cavities is symmetrical so as to rapidly distinguish the winning card, for each line representing a trick, by reversing the orientation of the corresponding piece with respect to the other three pieces in this line and in that the board (21) has a position (29) intended for displaying the whole of the progress of the bidding for each round.

2. Device according to claim 1, characterized in that each of the rows (29, 30, 31, 32) of cavities of a first series is formed by a groove which receives, in addition to the thirteen pieces (23) representing the thirteen cards of a hand, three separating pieces (27) intended to be disposed between the four suits.

## Patentansprüche

1. Einrichtung zum Simulieren eines Bridgespieles und der vorzunehmenden Stiche, welche aus einem Spielbrett mit Vertiefungen besteht, die zur Aufnahme teilweise einzusetzender prismatisch geformter Spielsteine für die Spielkarten vorgesehen sind, welche eine Darstellung zur Angabe des Kartenwertes aufweisen, wobei eine erste Gruppe Vertiefungen (29, 30, 31, 32) auf dem peripheren Rand eines praktisch quadratischen Mittelfeldes in der Weise verteilt ist, daß sie die vier Spiele einer beliebigen Runde darstellt, während eine zweite Gruppe von Vertiefungen die Kartenspielsteine aufnimmt, welche die dreizehn Stiche entsprechend ihrer Durchführung darstellen, und eine dritte Gruppe von Vertiefungen (24, 25, 26, 27) die zwei- undfünfzig Spielsteine in Reihen angeordnet aufnimmt, dadurch gekennzeichnet, daß jeder Kartenspielstein (23) sowohl eine Angabe über den Kartenwert wie auch über die Farbe aufweist, so daß er ganz eindeutig eine zu spielende Karte symbolisch darstellt; daß die erste Gruppe Vertiefungen nur eine einzige Reihe Vertiefungen (29, 30, 31, 32) umfaßt, welche jeder Seite des Mittelfeldes zugeordnet und zur Aufnahme von dreizehn Kartenspielsteinen nebeneinander vorgesehen ist, welche die dreizehn Karten in der Hand eines Spielers darstellen, während die zweite Gruppe Vertiefungen innen im Mittelfeld angeordnet ist und nur dreizehn Zeilen zu je vier Vertiefungen umfaßt, welche auf vier Spalten entsprechend den vier Spielern verteilt sind, wobei jede dieser Zeilen zur Aufnahme der vier, einem Stich entsprechenden Kartenspielsteine vorgesehen ist; und daß die Anordnung der eingelegten Kartenspielsteine asymmetrisch ist, während die Form der Vertiefungen symmetrisch ist, so daß durch Umkehr der Richtung des entsprechenden Kartenspielsteins gegenüber den drei anderen Kartenspielsteinen in der entsprechenden Zeile, welche einen Stich darstellt, rasch die Gewinnkarte erkennbar ist; und daß schließlich das Spielbrett (21) ein Feld (39) zum Aufzeichnen des gesamten Ablaufs der angesagten Gebote in jeder Spielrunde aufweist.

2. Einrichtung nach Anspruch 1, dadurch gekennzeichnet, daß jede der vier Reihen (29, 30, 31, 32) von Vertiefungen der ersten Gruppe aus einer Längsvertiefung besteht, welche neben den dreizehn Kartenspielsteinen (23) zur Darstellung der dreizehn Karten in der Hand eines Spielers drei Trennsteine (27) zur Anordnung zwischen den vier Spielfarben aufnimmt.

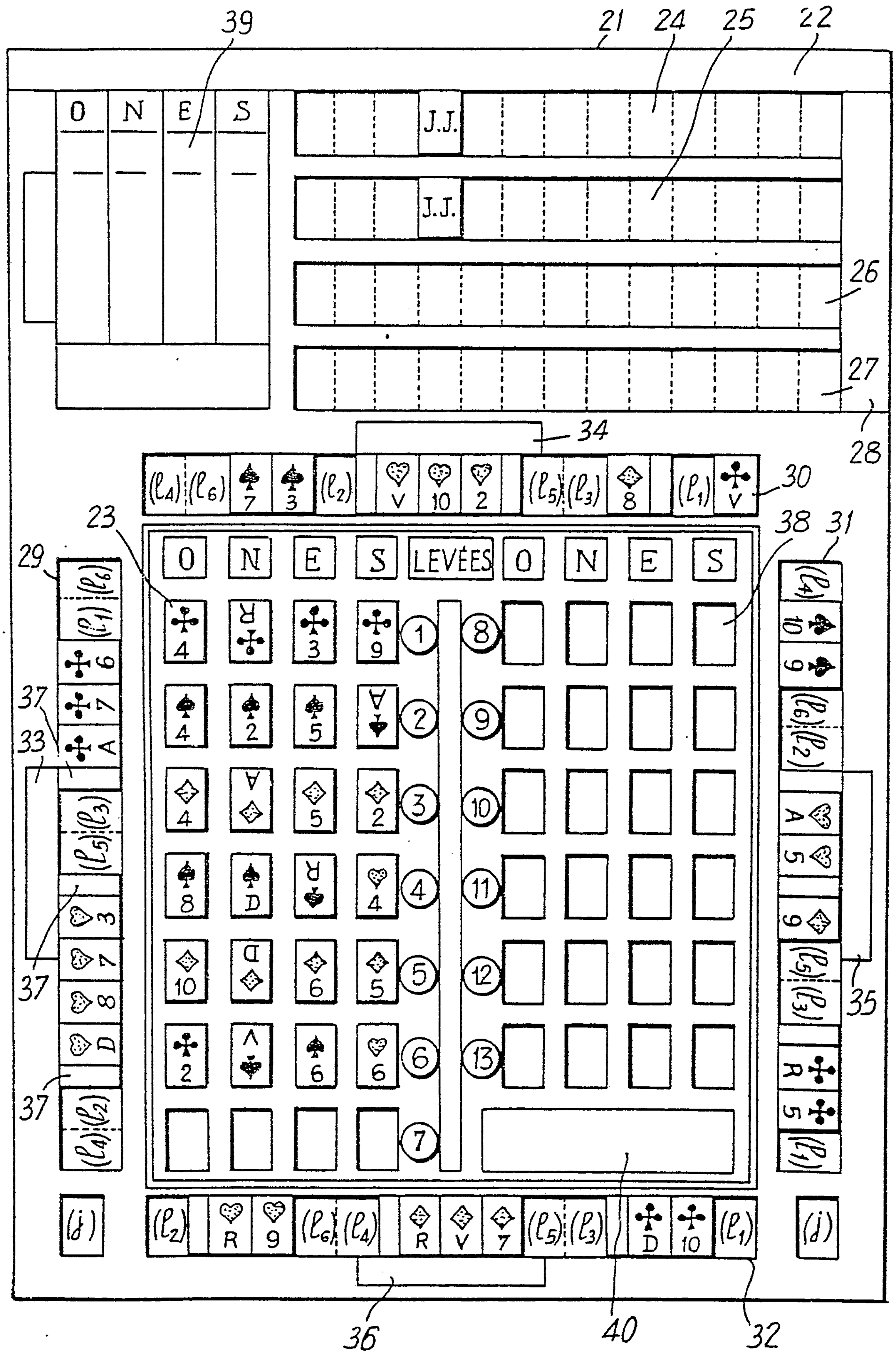
39
21
24
25
22
O N E S
J.J.
J.J.
26
27
28
34
30
23
38
31
29
O N E S LEVÉES O N E S
37
33
37
37
35
36
40
32